(19)

Europäisches
Patentamt
European
Patent Office
Office européen
des brevets

(11) **EP 3 751 360 A1**

(12) **EUROPEAN PATENT APPLICATION**

(43) Date of publication:
16.12.2020 Bulletin 2020/51

(51) Int Cl.:
**G05B 13/02** (2006.01)    **F03D 7/04** (2006.01)

(21) Application number: 19179516.0

(22) Date of filing: 11.06.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Siemens Gamesa Renewable Energy A/S**
**7330 Brande (DK)**

(72) Inventor: **Steffensen, Henrik**
**8000 Århus (DK)**

(74) Representative: **Aspacher, Karl-Georg**
**Siemens Aktiengesellschaft**
**Otto-Hahn-Ring 6**
**81739 München (DE)**

(54) **METHOD FOR COMPUTER-IMPLEMENTED DETERMINATION OF A DRAG COEFFICIENT OF A WIND TURBINE**

(57) The invention describes a method and a system for computer-implemented determination of a drag coefficient as a control variable for controlling of a wind turbine, by receiving, as a data stream, a set of data from a number of data sources, the set of data consisting, for each data source, of a plurality of time series data values, acquired within a given time period at given points in time, and estimating, by a processing unit (PU), the control variable (DC) based on the set of data as input of a machine learning algorithm (TMLA) being trained with training data of simulation time series data containing a number of operating states at different wind conditions and respective number of drag coefficients.

## FIG 4

**Description**

The invention relates to a method and a system for computer-implemented determination of a drag coefficient as a control variable for controlling of a wind turbine. Furthermore, the invention relates to a computer program product.

When developing control strategies of wind turbines, the following three objectives have to be considered: maximizing produced power, minimizing structural loads and minimizing noise. To achieve these objectives, it is crucial to be able to control a blade pitch angle according to a current wind situation correctly. More specifically, it is necessary to pitch the blades as much as possible into the wind without stalling. However, if the blade starts stalling the power output of the wind turbine will decrease while structural loads will increase. Furthermore, noise will increase if the blade starts stalling.

Stall detection is a difficult task. Generally, stall detection can be derived from a blade drag coefficient. The blade drag coefficient can be determined from aerodynamic simulations. However, without sensors to measure the blade drag coefficient it is not directly accessible.

To control a blade pitch angle, the pitch operating point is currently lower bound by a pitch trajectory, often referred to as opti-pitch. The pitch trajectory is computed based on a rotor performance profile. To ensure that the blade does not stall, a stall margin is added to that the trajectory. As the stall point changes with, e.g., air density, yaw error, and ice/soiling conditions, the stall margin needs to be conservative to account for these situations. In the end, this proceeding, which is based on a simulation of the pitch curve that is stored in a controller of the wind turbine, leads to a trade-off between the stall margin vs. the annual energy production (AEP). Unfortunately, the bigger the stall margin is, the lower the AEP will be.

Hence, there is a need for an easier method for the determination of an optimized pitch operating point of the wind turbine.

It is therefore an object of the present invention to provide a method which allows a reliable and easy determination or estimation of a blade drag coefficient which can be used as a control variable of a wind turbine. It is another object of the present invention to provide a system which allows a reliable and easy determination of the blade drag coefficient.

These objects are solved by a method according to the features of claim 1, a computer program product according to claim 11 and a system according to claim 12. Preferred embodiments are set out in the dependent claim.

According to a first aspect of the invention, a method for computer-implemented determination of a drag coefficient as a control variable for controlling of a wind turbine is suggested. The method comprises the following steps: S1) receiving, by an interface, as a data stream, a set of a data from a number of data sources, the set of data consisting, for each data source, of a plurality of time series values, acquired within a given time period at given points in time; and S2) estimating, by a processing unit, the control variable based on the set of data as input of a machine learning algorithm, being trained with training data of simulation time series data containing a number of operating dates at different wind conditions and a respective number of drag coefficients.

The invention is based on the consideration that by an online estimation of the blade drag coefficient (which below is referred to as drag coefficient) an optimum pitch operating point can be determined. For the online estimation of the drag coefficient, a machine learning algorithm is applied allowing for automated determination of the blade drag coefficient. Therefore, the trade-off between stall margin vs AEP can be optimized resulting in the possibility to maximize the produced power of the wind turbine, minimizing its structural loads with, at the same time, minimizing noise.

The method uses a trained machine learning algorithm which is trained with training data of simulation time series data containing a number of operating states at different wind conditions and a respective number of drag coefficients. The simulation time series data contain all features which are desired to be considered in the trained machine learning algorithm. For example, such simulation time series data can contain data in which the wind turbine is running at a normal production, a situation in which the wind turbine is exposed to gust, situations with soiled/icy blades of the wind turbine, situations with changing air density, situations with power boosts and situations with inertial response. These simulation time series data are used as input data to train the machine learning algorithm.

The set of data from the number of data sources which is received, by the interface, as a data stream, are times series data, i.e. data in the sequence of acquisition within the given time period at given points in time. Preferably, the data acquisition is made continuously, in particular, in regular time intervals. In other words, the data values within the given time period are acquired with a given frequency and therefore equidistant over time.

The data sources are, for example, different sensors of the wind turbine for acquiring respective turbine measurements as data values.

According to a preferred embodiment, the number of data sources consists of the following sensor data and/or calculated data out of one or more of the following turbine measurements: produced power, rotor speed, blade pitch angle, air density, tower top fore-aft acceleration, and blade root moment. While it is preferred that the produced power, the rotor speed and the blade pitch angle are always used as input data for the trained machine learning algorithm, the further turbine measurements, i.e. air density, tower top fore-aft acceleration and blade root moment are optional inputs which can help improving the accuracy of estimating the drag coefficient as control variable.

According to a further preferred embodiment, according to the trained machine learning algorithm, the control variable is estimated on a specific location of a blade of the wind turbine. This specific location is available through a simulation used to provide the training data with which the machine learning algorithm is trained.

As a machine learning algorithm, it is preferred to use a neural network to estimate the control variable. Although different machine learning algorithms and neural networks might be used to estimate the control variable, it is preferred that the machine learning algorithm is formulated as a nonlinear autoregressive with exogenous input network. This network is also known as NARX network.

The estimation of the control variable is based on a first number of input data of the set of data (i.e. the turbine measurements) and a second number of predicted outputs representing the control variable. The first number of inputs corresponds, for example, to the number of given points in time within the given time period. As a result, all of the set of data received at the interface are considered for estimating the drag coefficient. The first number of inputs may be equal to the second number of predicted outputs. Alternatively, the first number of inputs may not be equal to the second number of predicted outputs.

Based on the estimated control variable, a stall detection algorithm may be conducted. The stall detection algorithm can calculate the pitch operating point based on the estimated drag coefficient. The stall detection algorithm will, as a stall prevention functionality, interpret the estimated drag coefficient to determine if the blade is stalling at the given location on the blade. Then some decision logic will determine the control action.

According to a further aspect, a computer program product, directly loadable into the internal memory of a digital computer, comprising software code portions for performing the steps of one of the preceding claims when the product is run on a computer, is suggested. The computer program product may be in the form of a storage medium, such as a DVD, CD-ROM, USB-memory stick, memory card and so on. Alternatively, the computer program product may be in the form of a signal which may be transmitted via a wired or a wireless communication line.

According to further aspect, a system for computer-implemented determination of a drag coefficient as a control variable for controlling of a wind turbine, is suggested. The system comprises an interface for receiving, as a data stream, a set of data from a number of data sources, the set of data consisting, for each data source, of a plurality of time series data values, acquired within a given time period at given points in time. The processing unit is adapted to, by using a machine learning algorithm being trained with training data of simulation time series data containing a number of operating states at different wind conditions and a respective number of drag coefficients, estimate the control variable based on the set of data received at the interface.

The system has the same advantages as they have been described in accordance with the method described herein.

In further preferred embodiments, the processing unit may be adapted to carry out the steps of the method described herein.

The suggested method enables an online estimation of the drag coefficient according to the current operation of the wind turbine and wind conditions. As the drag coefficient can be estimated very precise, it can be used as a control variable for controlling the wind turbine. In particular, the drag coefficient may be used to determine the pitch operating point of the blades of the wind turbine.

By detecting the stall online and the possibility to act upon it, the stall margin can be less conservative. With a reduced stall margin, there is an expanded operation area regarding pitch activity. Reducing the stall margin means that it is possible to pitch more into the wind, thereby increasing the AEP. In addition, structural loads can be reduced. Moreover, avoiding stall reduces noise from the turbulence around the blades.

The method enables modeling a complex relationship between input and output without knowing the exact physical relation by means of a machine learning algorithm. The machine learning algorithm, for example a neural network, enables to model this complex system with high level of robustness using multiple domains, e.g. time and frequency, without knowing details on the physical relations in the system.

The invention will be described in more detail by means of the accompanying figures.

Fig. 1    shows a figure of a profile of a turbine blade in which, according to wind hitting on the turbine blade from a specific direction, different vectors including a drag path vector are outlined;

Fig. 2    is a diagram which shows the coefficients of lift and drag as a function of an angle of attack of wind hitting the turbine blade;

Fig. 3    is a block diagram illustrating a system according to the invention; and

Fig. 4    is a flow chart illustrating steps for carrying out the method of the invention.

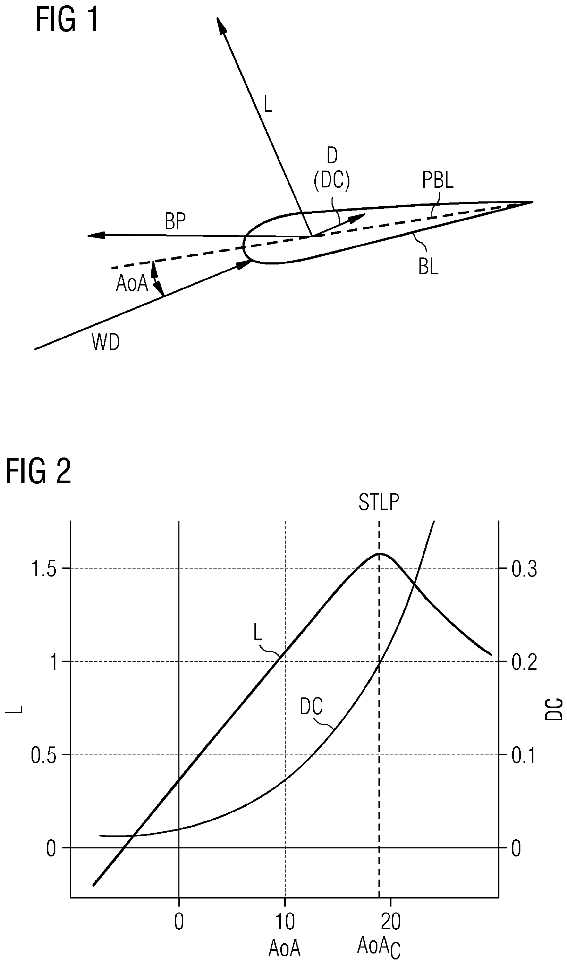

Fig. 1 shows the profile of a blade BL of a not illustrated wind turbine and different vectors resulting from wind hitting on a leading edge of the blade BL. The direction of the wind hitting on the leading edge of the blade BL is denoted with WD. The wind direction hits on the blade BL with an angle of attack AoA which is formed between the wind direction WD and a plane PBL of the blade BL in which the blade BL extends. In addition, Fig. 1 shows the vectors of drag D, lift L and the blade path BP. The blade path BP indicates the direction of movement of the blade BL and lies within a rotor plane. Drag D and lift L represent resulting forces from the wind hitting on the blade BL. The magnitudes of the drag coefficient DC given by the vector D and lift D in Fig. 1 are used to derive whether the blade BL is stalling at that specific position on the blade.

Fig. 2 shows a diagram of the coefficients of the vectors lift L and drag D as a function of the angle of attack AoA of the wind hitting the turbine blade BL. The maximum of lift L represents a stall point STLP which is a function of the angle of attack AoA of the wind. The value of the angle of attack AoA at the stall point STLP is a critical angle of attack $AoA_C$. If the blade BL, as shown in Fig. 1, turns clockwise, the angle of attack AoA will increase. This means, the drag coefficient DC increases as well. When the angle of attack AoA reaches the critical angle $AoA_C$ lift L starts to drop meaning that the blade BL is stalling. If the pitch angle is chosen optimal, lift L should be greater than the drag coefficient DC.

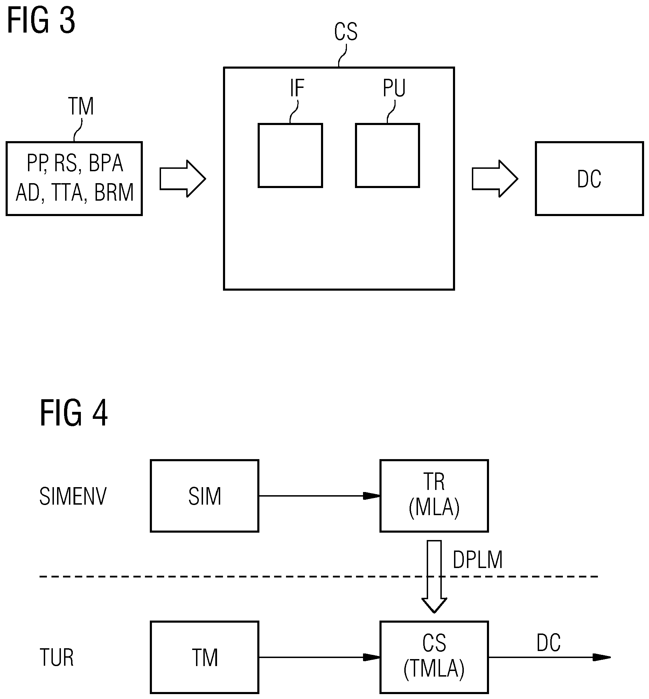

Fig. 3 shows a computer system CS which is adapted to determine the drag coefficient DC as a control variable for controlling the wind turbine. The computer system comprises an interface IF for receiving data and a processing unit PU for computing the data received at the interface IF. The data received at the interface IF are turbine measurements TM provided by a couple of sensors (not illustrated) of the wind turbine. The turbine measurements TM as input data enable a trained machine learning algorithm carried out by the processing unit PU to estimate the drag coefficient DC. The estimation of the drag coefficient is based on produced power PP, rotor speed RS and blade pitch angle BPA as input data. As optional and additional input data an air density AD, a tower top fore-aft acceleration TTA and a blade root moment BRM may be provided at the interface IF.

The input data (i.e. turbine measurements TM) is provided as a data stream, i.e. as time series data. The data stream consists of a set of data from the data sources (i.e. the sensors) wherein, for each data source, a plurality of time series data values, acquired within a given time period at given points in time is received at the interface IF. In other word, data acquisition is made continuously and, in particular, in regular time intervals.

The processing unit processes the received data using a trained machine learning algorithm, for example a trained neural network. The neural network estimates the drag coefficient DC on a specific location on the blade which is available through a simulation. The machine learning algorithm MLA can be formulated as a nonlinear autoregressive with exogenous input (NARX) network. The NARX network predicts time series based on a given past number of input and a given past number of predicted outputs (as a feedback). The given past number of input and the given past number of predicted outputs may equal. However, the given past numbers of input and output may differ as well. The estimation of the drag coefficient DC may be made on a function

$$y(t) = f(x(t), x(t-1), \ldots, x(t-d_1), y(t-1), \ldots, y(t-d_2)),$$

where y(t) is the predicted time series at time t, x(t) is the input time series at time t and $d_1$ and $d_2$ are the time delays on input and output feedback.

The NARX network, which is an embodiment for a possible machine learning algorithm, is trained on simulation time series data containing all features that is desired to represent in the network, such as simulation cases for running the wind turbine at normal production, running the wind turbine at gust, running the wind turbine with an inertial response, running the wind turbine with power boost, running the wind turbine with soiled/icy blades and/or running the wind turbine with changing air densities. These simulation cases consist of simulation time series data SIM (see Fig. 4) which are input to a machine learning algorithm MLA to get trained (TR).

Providing the simulation time series data SIM and conducting the training TR with the NARX network is done in a simulation environment which is indicated by SIMENV above the dotted line in Fig. 4. The trained machine learning algorithm (TMLA) is deployed on the computer system CS. The deployment is indicated by the arrow with DPLM. The trained machine learning algorithm TMLA receives as input data the turbine measurements TM and estimates the drag coefficient DC. This is carried out by the computer system CS of the turbine online and shown below the dotted line with TUR in Fig. 4.

The drag coefficient DC can then be used as a control variable by the computer system CS to reduce the stall margin and pitch the blade into the wind as far as possible, thereby increasing AEP. By detecting the stall online and acting upon it, structural loads acting on the blade can be reduced. In addition, avoiding stall reduces the noise from the turbulence around the blades.

The machine learning algorithm, for example the described NARX network, enables to model the complex system of a wind turbine with high level of robustness using multiple domains, e.g. time and frequency, without knowing details on the physical relations in the system. This enables an online estimation of the drag coefficient according to the current operation of the wind turbine and wind conditions. As the drag coefficient can be estimated very precise, it can be used as a control variable for controlling the wind turbine. In particular, the drag coefficient may be used to determine the pitch operating point of the blades of the wind turbine. As an advantage, the stall margin may be reduced. It is possible to have a more aggressive use of the pitch angle. This leads to an increased AEP of the wind turbine, reduces structural loads to the components of the wind turbine and reduces noise.

**Claims**

1. A method for computer-implemented determination of a drag coefficient (DC) as a control variable for controlling of a wind turbine, comprising the steps of:

   S1) receiving, by an interface (IF), as a data stream, a set of data from a number of data sources, the set of data consisting, for each data source, of a plurality of time series data values, acquired within a given time period at given points in time; and
   S2) estimating, by a processing unit (PU), the control variable (DC) based on the set of data as input of a machine learning algorithm (TMLA) being trained with training data of simulation time series data containing a number of operating states at different wind conditions and a respective number of drag coefficients.

2. The method according to claim 1, wherein the number of data sources consists of sensor data and/or calculated data out of one or more of the following turbine measurements (TM):

   - produced power (PP),
   - rotor speed (RS),
   - blade pitch angle (BPA),
   - air density (AD),
   - tower top fore-aft acceleration (TTA),
   - blade root moment (BRM).

3. The method according to claim 1 or 2, wherein, as a machine learning algorithm (MLA, TMLA), a neural network is used to estimate the control variable (DC).

4. The method according to one of the preceding claims, wherein, according to the trained machine learning algorithm (TMLA), the control variable is estimated on one or more specific locations of a blade of the wind turbine.

5. The method according to one of the preceding claims, wherein the machine learning algorithm (MLA, TMLA) is formulated as a nonlinear autoregressive with exogenous input (NARX) network.

6. The method according to claim 5, wherein the estimation of the control variable is based on a first number of input data of the set of data and a second number of predicted outputs representing the control variable.

7. The method according to claim 6, wherein the first number of inputs corresponds to the number of given points in time within the given time period.

8. The method according to claim 6 or 7, wherein the first number of inputs and the second number of predicted outputs equals or not.

9. The method according to one of the preceding claims, wherein, based on the estimated control variable, a stall detection algorithm is conducted.

10. Computer program product, directly loadable into the internal memory of a digital computer, comprising software code portions for performing the steps of one of the preceding claims when said product is run on a computer.

11. A system for computer-implemented determination of a drag coefficient (DC) as a control variable for controlling of a wind turbine, comprising:

- an interface (IF) for receiving, as a data stream, a set of data from a number of data sources, the set of data consisting, for each data source, of a plurality of time series data values, acquired within a given time period at given points in time;

- a processing unit (PU) adapted to, by using a machine learning (ML) algorithm being trained with training data of simulation time series data containing a number of operating states at different wind conditions and a respective number of drag coefficients,

= estimate the control variable (DC) based on the set of data received at the interface (IF).

12. System according to claim 11, wherein the processing unit (PU) is adapted to carry out the steps of any of the preceding claims 2 to 9.

## FIG 1

## FIG 2

FIG 3

CS

TM

| PP, RS, BPA AD, TTA, BRM |

IF     PU

DC

FIG 4

SIMENV    SIM → TR (MLA)

DPLM

TUR    TM → CS (TMLA) → DC

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/076518 A1 (VITALE GIANPAOLO [IT] ET AL) 17 March 2016 (2016-03-17) | 11,12 | INV.<br>G05B13/02<br>F03D7/04 |
| A | * paragraphs [0027] - [0051] * | 1-10 | |
| X | CN 109 488 526 A (UNIV HUNAN TECHNOLOGY) 19 March 2019 (2019-03-19) | 11,12 | |
| A | * the whole document * | 1-10 | |
| X | EP 3 432 091 A1 (SIEMENS AG [DE]) 23 January 2019 (2019-01-23) | 11,12 | |
| A | * paragraphs [0021] - [0030] * | 1-10 | |
| X | EP 2 213 873 A1 (SIEMENS AG [DE]) 4 August 2010 (2010-08-04) | 11,12 | |
| A | * paragraphs [0001] - [0042] * | 1-10 | |

TECHNICAL FIELDS
SEARCHED      (IPC)

G05B
F03D

The present search report has been drawn up for all claims

| Place of search | Date of completion of the search | Examiner |
|---|---|---|
| The Hague | 18 November 2019 | José Luis Meseguer |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 17 9516

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2019

| Patent document cited in search report | | Publication date | Patent family member(s) | | Publication date |
|---|---|---|---|---|---|
| US 2016076518 | A1 | 17-03-2016 | EP | 2994637 A1 | 16-03-2016 |
| | | | US | 2016076518 A1 | 17-03-2016 |
| | | | WO | 2014181367 A1 | 13-11-2014 |
| CN 109488526 | A | 19-03-2019 | NONE | | |
| EP 3432091 | A1 | 23-01-2019 | NONE | | |
| EP 2213873 | A1 | 04-08-2010 | NONE | | |

EPO FORM P0459

For more details about this annex : see Official Journal of the European Patent Office, No. 12/82